# EUROPEAN PATENT SPECIFICATION

(11) **EP 1 731 061 B1**
(45) Date of publication and mention of the grant of the patent: **06.05.2009**
(21) Application number: 05253476.5
(22) Date of filing: 06.06.2005
(51) Int. Cl.: A47J 17/04

(54) **Food masher**
Maischapparat für Lebensmittel
Presse à produits alimentaires

(43) Date of publication of application: 13.12.2006
(73) Proprietor: So, Kwok Kuen, Kowloon, Hong Kong (CN)
(72) Inventor: So, Kwok Kuen, Kowloon, Hong Kong (CN)
(74) Representative: Martin, David John

(56) References cited:
- BE-A- 537 984
- FR-A- 614 257
- FR-A- 1 081 065
- US-A- 3 786 999
- US-A- 4 714 205
- US-A1- 2004 103 797
- US-B1- 6 715 706

## Description

The present invention relates to a food masher or pulpifier.

### BACKGROUND OF THE INVENTION

More particularly, although not exclusively, the invention relates to a handheld device which can be used to mash vegetables such as potatoes, pumpkins, sweet potatoes and butternuts.

It is known to provide handheld vegetable mashers comprising a cup-shaped receptacle having a perforated floor and a lever-activated plunger for pushing the soft vegetables against the floor to force extrusion of pulped vegetable material through the perforations.

Such devices are limited to having perforations of a fixed size which may not be suitable for a wide range of vegetables, and are difficult to clean thoroughly.

FR 1 081 065 describes a food press having a support frame with an opening and a hopper with a perforated placed therein. The press has two handles, one of which has a plunger and is fully detachable from the frame to allow ease of cleaning.

### OBJECTS OF TIRE INVENTION

It is an object of the present invention to overcome or substantially ameliorate the above disadvantages and/or more generally to provide an improved food masher.

### SUMMARY OF THE INVENTION

According to the invention, there is provided a food masher comprising:
a support frame having an opening;
a hopper having a perforated floor, received detachably by the support frame within the opening;
a handle extending from the support frame;
a lever extending pivotally from the support frame; and
a plunger attached to the lever and extending into the hopper.

The food masher also comprises a locking mechanism upon the support frame which prevents rotation of the hopper within the opening.

Preferably, the support frame comprises a slot at the opening and the hopper has an external tab received by the slot.

More preferably, the slot is L-shaped so as to cooperate with the tab in bayonet fashion as the hopper is inserted into the support frame.

Preferably, the locking mechanism comprises a sliding latch and a spring biasing the latch into the opening for engagement with the hopper, and an activation button extending from the latch through an opening of the handle.

In a specific construction, the hopper comprises a wall to which the floor is threadedly attached.

Preferably, the wall comprises external thread, and further comprising a retaining ring having internal thread engaging the external thread.

More preferably, the retaining ring comprises an internal flange that bears upon the perforated floor to retain the perforated floor against the wall.

It is preferred that the plunger is attached pivotally to the lever.

In a specific construction that the food masher further comprises a leg extending from the support frame diametrically opposite the handle, so that both the leg and handle can be placed upon an opening of the cooking hopper to support the masher thereon.

Preferably, the leg comprises a lip and a spring-loaded tongue bearing toward the lip so that the tongue and lip clamp to the cooking hopper alongside its opening.

### BRIEF DESCRIPTION OF DRAWINGS

The invention will now be more particularly described, by way of example only, with reference to the accompanying drawings, in which:

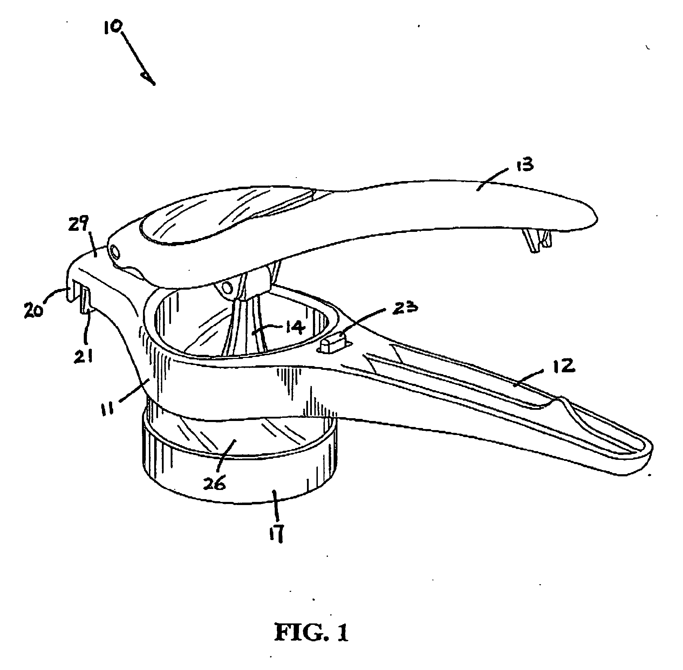

Figure 1 is a perspective view of a handheld food masher in accordance with the invention;

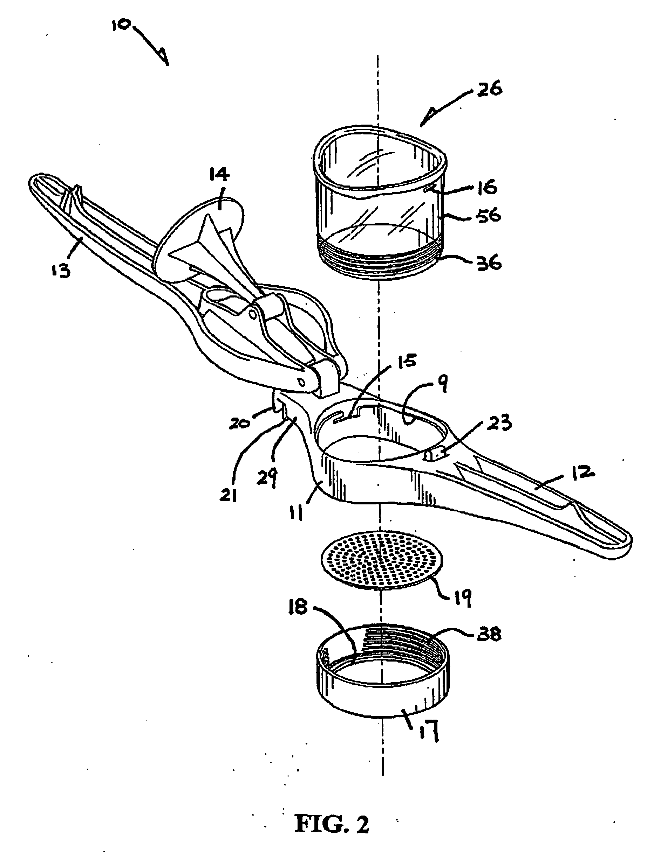

Figure 2 is a parts-exploded perspective view of the food masher of Figure 1;

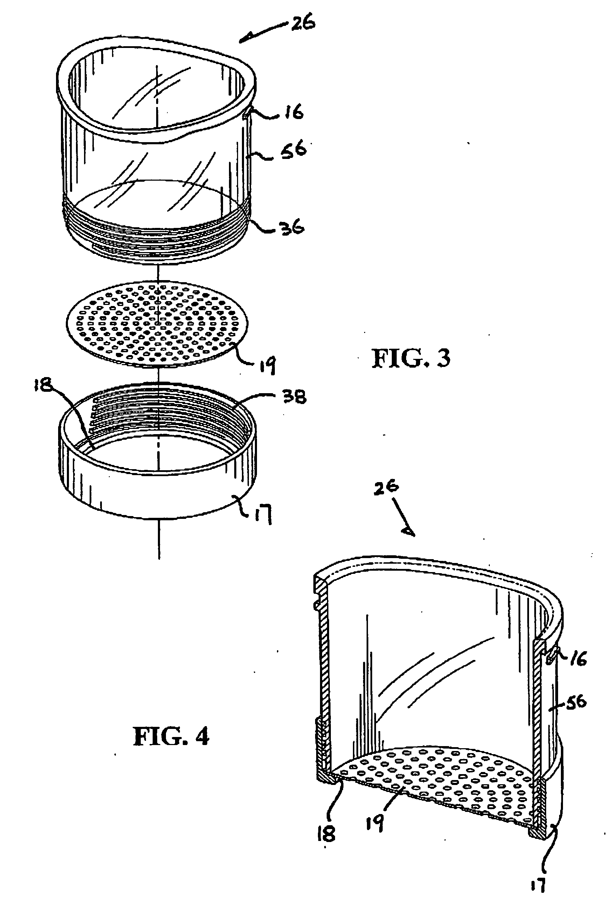

Figure 3 is a parts-exploded perspective view of a hopper of the masher of Figure 1;
Figure 4 is a cross-sectional perspective view of the hopper of Figure 3;
Figure 5 is a cross-sectional perspective view of a support frame and a hopper wall of the masher of Figure 1, in an unlocked configuration;
Figure 6 is a cross-sectional perspective view of the support frame and the hopper wall of Figure 5, in a locked configuration;

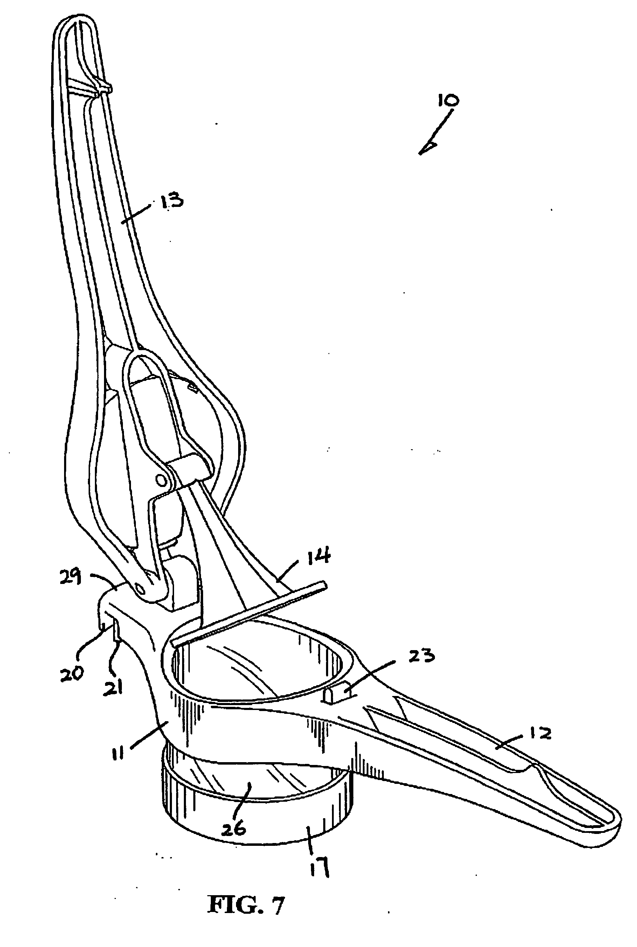

Figure 7 is a perspective view of the masher of Figure 1 in an open configuration;

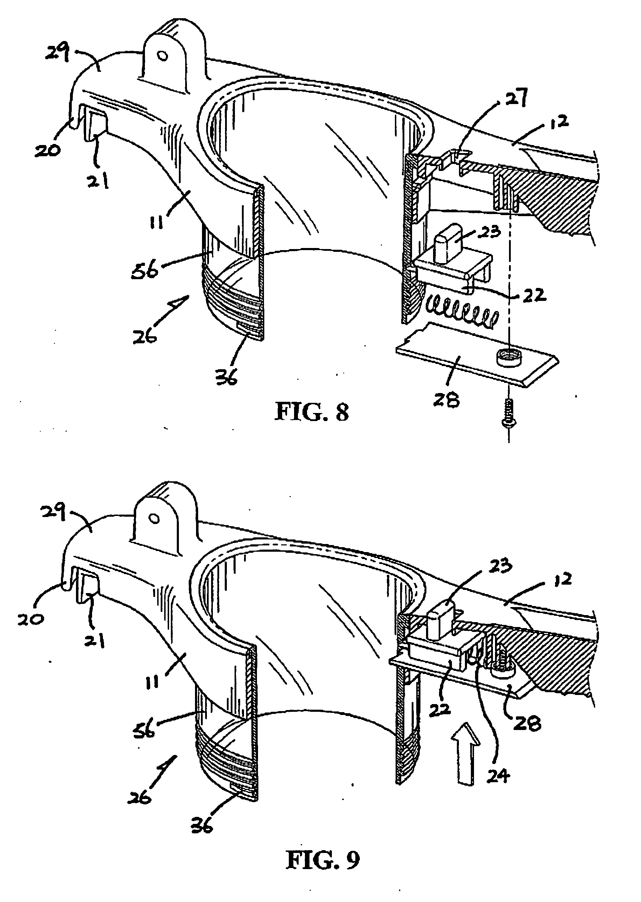

Figure 8 is a cross-sectional, parts-exploded perspective view of the support frame and the hopper of the masher of Figure 7, showing its locking mechanism;
Figure 9 is a cross-sectional perspective view of the support frame and the hopper of Figure 8, showing its locking mechanism;

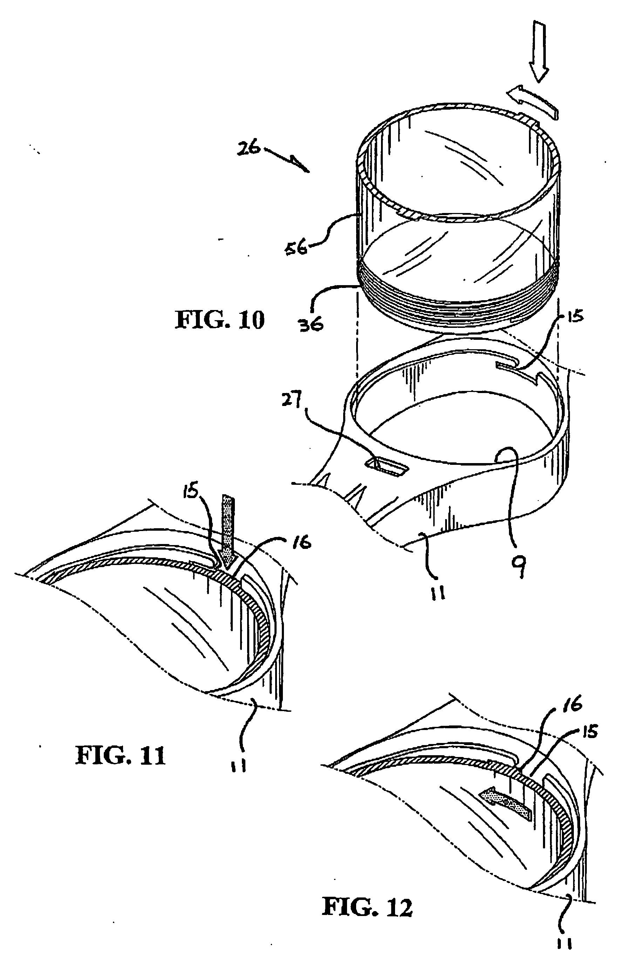

Figure 10 is a perspective view of the support frame and the hopper wall detached of Figure 5, showing bayonet connection features;
Figure 11 is a perspective view similar to Figure 10, showing the hopper wall attached to the support frame of Figure 5; and
Figure 12 is a perspective view similar to Figure 11, showing a subsequent step in the sequence of bayonet into connection between the support frame and the hopper wall of Figure 5.

### DETAILED DESCRIPTION OF PREFERRED EMBODIMENT

Referring to the drawings, there is shown a vegetable masher 10 which would typically comprise metal and/or moulded plastics parts. The masher 10 includes a support frame 11 having a handle 12 extending therefrom. Attached pivotally to the support frame 11 is a lever 13 to which a plunger 14 is pivotally attached.

The support frame 11 comprises a circular opening 9 into which a hopper 26 is received. The hopper 26 has a cylindrical hopper wall 56, from which a pair of diametrically opposed tabs 16 extend. The opposed tabs 16 are received by L-shaped slots 15 inside the opening 9 at the frame 11.

The hopper 26 has external thread 36 at the bottom of its wall 56 to which there is engaged a retaining ring 17 having internal thread 38 and an annular flange 18 that retains a perforated floor 19 against the bottom of the wall 56.

Opposite the handle 12, there is provided a support leg 29, which together with the handle 12 serves to support the masher 10 upon an upper rim of a cooking hopper or bowl for example. The leg 29 comprises a lip 20 at its distal end. Within the leg 29, there is provided a tongue 21 that is forced toward the lip 20 by a spring 25. The tongue 21 and lip 20 act as the clamp by which the leg 29 can be attached securely to the upper rim of the cooking hopper or bowl.

As can be seen from the figures, the L-shaped nature of the slots 15 allows for bayonet-type inter-engagement of the hopper 26 with the support frame 11.

A locking mechanism 46 is employed to prevent the hopper 26 from being inadvertently rotated and thereby removed from the support frame 11. The locking mechanism 46 comprises a sliding latch 22 that is mounted within the handle 12 to slide diametrically. The latch 22 is spring-biased by a coil spring 24 toward the hopper 26. The latch 22 is retained in position by a retaining plate 28 that is screw-fixed to the handle 12. A pushbutton 23 extends upwardly from the latch 22 through an aperture 27. The aperture 27 is sized to enable sliding movement of the pushbutton 23 together with the latch 22 in a direction away from the hopper 26 for unlocking purposes.

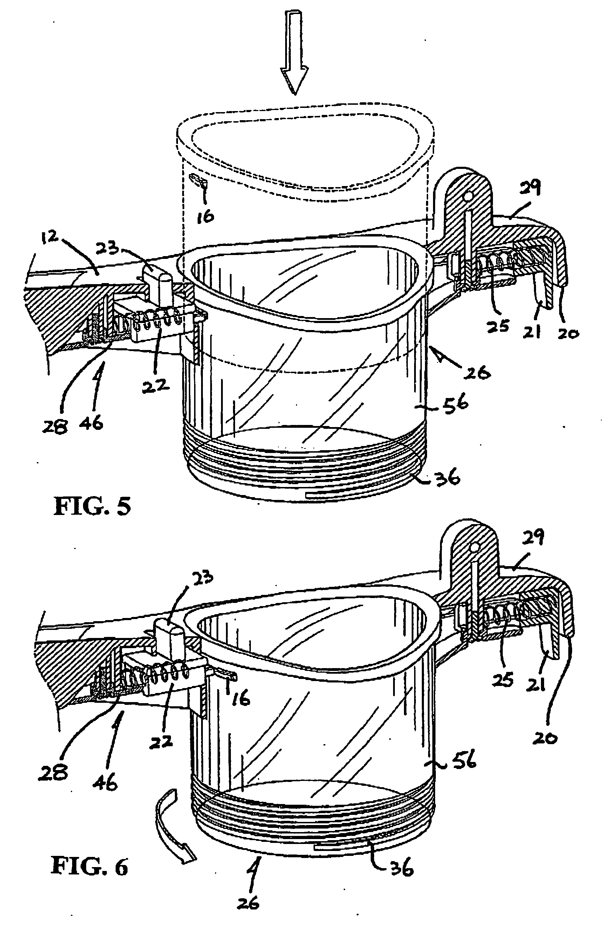

In the locked position, the latch 22 prevents movement of the tab 16 as shown in Figure 6.

In use, the perforated floor 19 is attached to the bottom of the hopper 26 using the retaining ring 17 and soft vegetable (or other food) material is inserted into the hopper 26. The hopper 26 is then bayonet-fixed within the support frame 11 so that the plunger 14 can be inserted into the hopper 26 and depressed upon activation of lever 13 toward handle 12. During bayonet-fixing, the latch 22 clicks past the tab 16. The masher 10 can be clamped upon the cooking hopper or bowl by simply pressing the tongue 21 against its upper rim so that the lip 20 clicks over the upper rim after which the spring 25 presses the tongue 21 toward the lip 20 to clamp the masher 10 in place.

After use, the pushbutton 23 is pulled back by thumb-force away from the hopper 26 so that the latch 22 clears the path for tab 16 to enable rotation of the hopper 26 for lifting out of the support frame 11.

It should be appreciated that modifications and alterations obvious to those skilled in the art are not to be considered as beyond the scope of the present invention. For example, rather than the L-shaped bayonet slots 15, the hopper 26 might simply slot downwardly into vertical slots 15 in the locking mechanism 46 might comprise a latch 22 that extends into a recess upon the outer surface of being hopper 26.

## Claims

1. A food masher (10), comprising:
a support frame (11) having an opening (9);
a hopper (26) having a perforated floor (19), received detachably by the support frame within the opening;
a handle (12) extending from the support frame; frame;
a lever (12) extending pivotally from the support frame; and
a plunger (14) attached to the lever and extending into the hopper, **characterised in that** the food masher further comprises a locking mechanism (46) upon the support frame which prevents rotation of the hopper within the opening.

2. The food masher as claimed in claim 1, wherein the support frame (11) comprises a slot (15) at the opening and the hopper has an external tab (16) received by the slot.

3. The food masher as claimed in claim 2, wherein the slot (15) is L-shaped so as to cooperate with the tab (16) in bayonet fashion as the hopper (26) is inserted into the support frame (11).

4. The food masher as claimed in claim 1, wherein the locking mechanism (46) comprises a sliding latch (22) and a spring (24) biasing the latch (22) into the opening for engagement with the hopper, and an activation button (23) extending from the latch through an opening (27) of the handle.

5. The food masher as claimed in any preceding claim, wherein the hopper (26) comprises a wall (56) to which the floor (19) is threadedly attached.

6. The food masher as claimed in claim 5, wherein the wall (56) comprises external thread (36), and further comprising a retaining ring (17) having internal thread (38) engaging the external thread.

7. The food masher as claimed in claim 6, wherein the retaining ring (17) comprises an internal flange (18) that bears upon the perforated floor (19) to retain the perforated floor against the wall (56).

8. The food masher as claimed in any preceding claim, wherein the plunger (14) is attached pivotally to the lever (13).

9. The food masher as claimed in any preceding claim, further comprising a leg (29) extending from the support frame (11) diametrically opposite the handle (12), so that both the leg and handle can be placed upon an opening of a cooking hopper to support the masher thereon.

10. The food masher as claimed in claim 9, wherein the leg (29) comprises a lip (20) and a spring-loaded tongue (21) bearing toward the lip (20) so that the tongue and lip clamp to the cooking hopper alongside its opening.

## Patentansprüche

1. Lebensmittelstampfer (10),umfassend:
einen Stützrahmen (11) mit einer Öffnung (9);
einen Trichter (26) mit einem perforierten Boden (19), der entfernbar durch den Stützrahmen innerhalb der Öffnung aufgenommen wird;
einen Griff (12), der sich vom Stützrahmen erstreckt;
einen Hebel (13), der sich schwenkbar vom Stützrahmen erstreckt;
und
einen Kolben (14), der am Hebel angebracht ist und sich in den Trichter hinein erstreckt, **dadurch gekennzeichnet, dass** der Lebensmittelstampfer ferner einen Verriegelungsmechanismus (46) auf dem Stützrahmen umfasst, der das Drehen des Trichters innerhalb der Öffnung verhindert.

2. Lebensmittelstampfer wie in Anspruch 1 definiert, bei dem der Stützrahmen (11) eine Kerbe (15) an der Öffnung umfasst und der Trichter einen äußeren Zapfen (16) aufweist, der von der Kerbe aufgenommen wird.

3. Lebensmittelstampfer wie in Anspruch 2 definiert, bei dem die Kerbe (15) L-förmig ist, um mit dem Zapfen (16) bajonettartig zusammenzuwirken während der Trichter (26) in den Stützrahmen (11) eingesetzt wird.

4. Lebensmittelstampfer wie in Anspruch 1 definiert, bei dem der Verriegelungsmechanismus (46) eine gleitende Klinke (22) und eine Feder (24), die die Klinke für das Eingreifen in den Trichter in die Öffnung vorspannt, und einen Betätigungsknopf (23) umfasst, der sich von der Klinke durch eine Öffnung (27) des Griffes erstreckt.

5. Lebensmittelstampfer wie in einem der voranstehenden Ansprüche definiert, bei dem der Trichter (26) eine Wand (56) umfasst, bei dem der Boden (19) mit einem Gewinde angebracht ist.

6. Lebensmittelstampfer wie in Anspruch 5 definiert, bei dem die Wand (56) ein äußeres Gewinde (36) umfasst, und ferner einen Haltering (17) mit einem inneren Gewinde (38) umfasst, der in das äußere Gewinde eingreift.

7. Lebensmittelstampfer wie in Anspruch 6 definiert, bei dem der Haltering (17) einen inneren Flansch (18) umfasst, der den perforierten Boden (19) stützt, um den perforierten Boden gegen die Wand (56) zu halten.

8. Lebensmittelstampfer wie in einem der voranstehenden Ansprüche definiert, bei dem der Kolben (14) schwenkbar am Hebel (13) angebracht ist.

9. Lebensmittelstampfer wie in einem der voranstehenden Ansprüche definiert, ferner umfassend einen Schenkel (29), der sich vom Stützrahmen (11) diametral entgegengesetzt zum Griff (12) erstreckt, so dass sowohl der Schenkel als auch der Griff auf eine Öffnung eines Küchentrichters anbracht werden kann, um den Stampfer darauf zu unterstützen.

10. Lebensmittelstampfer wie in Anspruch 9 definiert, bei dem der Schenkel (29) einen Ansatz (20) und einen federbeanspruchten Ausläufer (21) umfasst, der in Richtung des Ansatzes (20) so gedrückt wird, dass der Ausläufer und der Ansatz den Küchentrichter entlang seiner Öffnung einklemmt.

## Revendications

1. Broyeur de nourriture (10),comprenant:
un cadre de support (11) comportant une ouverture (9);
un entonnoir (26) avec un fond percé (19), reçu de manière détachable par le cadre de support dans l'ouverture;
une poignée (12), s'étendant depuis le cadre de support;
un levier (13), s'étendant de manière pivotante à partir du cadre de support;
et
un piston (14), fixé au levier et s'étendant dans l'entonnoir, **caractérisé en ce que**
le broyeur de nourriture comprend en outre un mécanisme de verrouillage (46) au-dessus du cadre de support qui empêche une rotation de l'entonnoir dans l'ouverture.

2. Broyeur de nourriture selon la revendication 1, dans lequel le cadre de support (11) comprend une fente (15) au niveau de l'ouverture et l'entonnoir comporte une patte externe (16) reçue par la fente.

3. Broyeur de nourriture selon la revendication 2, dans lequel la fente (15) est en forme de L pour une coopération en baïonnette avec la patte (16) lorsque l'entonnoir (26) est inséré dans le cadre de support (11).

4. Broyeur de nourriture selon la revendication 1, dans lequel le mécanisme de verrouillage (46) comprend un verrou coulissant (22) et un ressort (24) sollicitant le verrou (22) dans l'ouverture pour un engagement avec l'entonnoir, et un bouton d'activation (23) s'étendant depuis le verrou à travers une ouverture (27) de la poignée.

5. Broyeur de nourriture selon l'une quelconque des revendications précédentes, dans lequel l'entonnoir (26) comprend une paroi (56) sur laquelle le fond (19) est fixé par filetage.

6. Broyeur de nourriture selon la revendication 5, dans lequel la paroi (56) comprend un filetage extérieur (36) et comprenant en outre une bague de rétention (17) ayant un filetage interne (38) engageant le filetage extérieur.

7. Broyeur de nourriture selon la revendication 6, dans lequel la bague de rétention (17) comprend une bride interne (18) qui repose sur le fond perforé (19) pour retenir le fond perforé contre la paroi (56).

8. Broyeur de nourriture selon l'une quelconque des revendications précédentes, dans lequel le piston (14) est fixé de manière pivotante au levier (13).

9. Broyeur de nourriture selon l'une quelconque des revendications précédentes, comprenant en outre une jambe (29) s'étendant depuis le cadre de support (11) diamétralement opposé à la poignée (12), de sorte que la jambe et la poignée peuvent être placés sur une ouverture d'un entonnoir de cuisine pour supporter le broyeur sur celui-ci.

10. Broyeur de nourriture selon la revendication 9, dans lequel la jambe (29) comprend une lèvre (20) et une langue montée sur ressort (21) pressée vers le lèvre (20) de sorte que la langue et la lèvre serrent l'entonnoir de cuisine le long de son ouverture.
